# EUROPEAN PATENT APPLICATION

(11) **EP 4 456 094 A1**
(43) Date of publication of application: **30.10.2024**
(21) Application number: 23169948.9
(22) Date of filing: 26.04.2023
(51) Int. Cl.: H01F 7/06, H01F 7/127, H01F 7/128, F16K 31/06

(54) **A SOLENOID ASSEMBLY AND A METHOD FOR ITS MANUFACTURING**

(71) Applicant: KNORR-BREMSE Systeme für Nutzfahrzeuge GmbH, 80809 München (DE)
(72) Inventor: KUMBHAR, Sagar, 411018 Pune (IN); PS, Arun, 686634 Kerala (IN); DEVKHILE, Nirmiti, 411018 Pune (IN)

(57) **Abstract**

A method for manufacturing a solenoid assembly includes providing (S110) a valve unit (110) with a solenoid valve; selecting (S120) a connector assembly (121, 122) from a plurality of connector assemblies (120), each of which provides a different plug connection (125, 126) with contacts (123) for receiving respective electrical signals for the solenoid valve; and detachably mounting (S130) the selected connector assembly (121, 122) on the provided valve unit (110) to obtain the solenoid assembly. The valve unit (110) or the selected connector assembly (121, 122) includes a printed circuit board (130) with electronic components configured to process the electrical signals received by the plug connection (125, 126) and to generate control signals for controlling the solenoid valve.

## Description

The present invention relates to a method of manufacturing a solenoid assembly, a solenoid assembly and, in particular, to a new modular connector-solenoid assembly.

Current designs of solenoid assemblies offer only a single connector variant for a given solenoid assembly (e.g. for a particular customer). If a new connector variant is needed, it cannot be retrofitted directly. To introduce a new connector, it needs to be included on the same assembly line. This disturbs the solenoid assembly line, or different assembly lines are needed for the different connector variants.

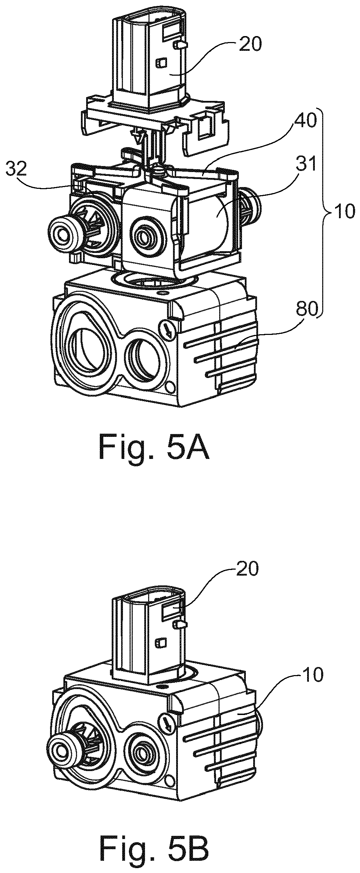

**Figs. 5A** and **5B** illustrate a conventional solenoid assembly, wherein Fig. 5A shows an exploded view and Fig. 5B an overview. The solenoid assembly includes a valve assembly 10 couples to a plug connector 20. The valve assembly 10 includes a housing 80, a first solenoid valve 31 and a second solenoid valve 32, which are electrically contacted through a wiring 40 connected to the plug connector 20. The housing 80 accommodates the solenoid valves 31, 32, the wiring 40 and part of the plug connector 20.

In this conventional solenoid assembly, the plug connector 20 is partly integrated into the housing 80 so that it cannot be replaced with another plug connector without disassembling the solenoid assembly. Concretely, this conventional solenoid assembly comprises two housing portions which are connected to each other and thereby securing part of the plug connector 20 inside the housing 80. The plug connector 20 can only be replaced when the whole solenoid assembly is dismantled, i.e. the housing 80 has to be opened for this. Since the housing 80 is typically sealed, the replacements of the plug connector 20 will jeopardize the reliability of the whole solenoid assembly so that different plug connectors 20 have to be integrated during the assembly.

Therefore, there is a demand for solenoid assemblies that avoid alterations in the solenoid assembly line to replace the plug connector and which allow thus more flexibilities with respect to electrically contacting the solenoid.

At least some of the above-mentioned problems are overcome by a method for manufacturing a solenoid assembly according to claim 1 and a solenoid assembly according to claim 9. The dependent claims refer to further advantageous realizations for the subject matters defined in the independent claims.

The present invention relates a method for manufacturing a solenoid assembly. The method includes:
- providing a valve unit with a solenoid valve;
- selecting a connector assembly from a plurality of connector assemblies, each of which provides a different plug connection with contacts for receiving respective electrical signals for controlling the solenoid valve; and
- detachably mounting the selected connector assembly on the provided valve unit to obtain the solenoid assembly.

The valve unit or the selected connector assembly includes a printed circuit board with electronic components configured to process the electrical signals received by the plug connection and to generate control signals for controlling the solenoid valve.

It is understood that the valve unit can but does not need to include only a single valve but may include any number of electrically controlled valves.

Optionally, to mount the selected connector assembly to the valve unit, the step detachably mounting includes using at least one of the following connections:
- a snap-fit connection,
- a press-fit connection,
- a screw connection.

Therefore, according to embodiments, the valve unit and the connector assembly can be pre-manufactured and mounted together by a press-fit or screw connection without any additional assembly process.

The plurality of connector assemblies may include a first connector assembly with a first plug connection and a second connector assembly with a second plug connection, wherein the first plug connection and the second plug connection are different from each other. Then, optionally, the (snap-fit or press-fit or screw) connection in the step of detachably mounting can be the same utilized for the first connector assembly and for the second connector assembly. Therefore, the first connector assembly and the second connector assembly are interchangeable and thus the selected connector assembly can be detached from the valve unit without opening the housing of the valve unit. The selected connector assembly can be replaced by another connector assembly without dismantling the solenoid assembly. Furthermore, the selected connector assembly may only be mounted to the valve unit through the detachable connection (e.g. the snap-fit connection and/or the screw connection and/or the press-fit connection).

Optionally, the step detachably mounting mounts the selected connector assembly as a side cover on the valve unit.

Optionally, the step of selecting the connector assembly selects a connector assembly having an oval plug connection or a circular plug connection or any other desired shape.

The provided valve unit may include a plurality of valve pins being configured to provide an electric contact for the solenoid valve. In addition, the circuit board may comprise a contact structure with openings and may be secured in the selected connector assembly. Then, optionally, the step of detachably mounting includes introducing (simultaneously) the valve pins in the contact openings of the printed circuit board. Alternatively or additionally, the electric contact may also be established using spring contacts, plugs, clamps, terminals, contact pads, or any other suitable means.

According to another embodiment, the provided valve unit may include the printed circuit board being electrically connected to the solenoid valve. Then, optionally, the step of detachably mounting the selected connector assembly includes electrically contacting the contacts of the plug connection with the printed circuit board in the valve unit. The electric contact may again be established using contact pins, spring contacts, plugs, clamps, terminals, contact pads, or any other suitable means.

The provided the valve unit may include a cover that partially covers the printed circuit board secured in the valve unit (e.g. on one side of the housing). The cover includes an opening leaving part of the printed circuit board exposed. Then, optionally, the step of detachably mounting may include mounting the selected connector assembly on the opening of the cover of the valve unit (to close the opening). This mounting onto the opening may again be performed simultaneously (at the same time) with the step of connecting the plug connection with the plurality of contacts in or on the printed circuit board.

Further embodiments relate to a solenoid assembly which comprises:
- a valve unit with a solenoid valve (or more than one);
- a connector assembly including a plug connection with contacts for receiving respective electrical signals, the connector assembly being detachably mounted on the valve unit; and
- a printed circuit board with electronic components configured to process the electrical signals received by the plug connection and to generate control signals for controlling the solenoid valve,
wherein the printed circuit board includes a releasable (electrical) contact structure as an interface to selectively connect the printed circuit board to the solenoid valve in the valve unit or to contacts of the connector assembly. The connector assembly may be selected from a plurality of connector assemblies, each of which provides a different plug connection with contacts for receiving respective electrical signals.

Optionally, the releasable contact structure comprises one or more of the following: a contact pin, contact holes/openings, a spring contact, a plug, a clamp, a terminal, a contact pad.

Embodiments overcome problems of conventional assemblies by using connector interfaces (connector assemblies), wherein the solenoid valve unit is standardized and can be combined with various, separate connector assemblies to meet different requirements or demands. Therefore, the adaptations on different demands can easily be achieved without affecting the solenoid assembly line. Furthermore, embodiments utilize a small printed circuit board instead of the connector lead frames and the printed circuit board may act as contact interface. For this, the printed circuit board comprises a contact structure such as a pin interface to releasable connect the printed circuit board either with the valve unit or with connector assembly. Thus, the printed circuit board can be integrated inside the valve unit or inside the connector assembly, wherein integration may mean using non-releasable electrical connections between the integrated component.

Thus, by using the printed circuit board as interface instead of lead frames, it is possible to flexibly install connectors externally to the assembly based on requirements - unlike for existing designs where solenoid assembly is manufactured based on a dedicated application or a specific demand of a costumer. Thus, embodiments provide the advantage that various customer requirements can be met by combining customer-specific connector assemblies with a standard solenoid assembly.

Various embodiments of the present invention will be described in the following by way of examples only, and with respect to the accompanying drawings, in which:
- Figs. 1A-1D: depict solenoid assemblies with different detachable connections according to embodiments of the present invention.
- Figs. 2A, 2B: show the solenoid assembly with the printed circuit board in the valve unit according to another embodiment.
- Figs. 3A, 3B: illustrate the solenoid assembly with the printed circuit board again in the valve unit but with different plug connections according to yet other embodiments.
- Fig. 4: shows a schematic flow chart for a method for manufacturing the solenoid assembly.
- Figs. 5A, 5B: illustrate a conventional solenoid assembly.

Various examples will now be described more fully with reference to the accompanying drawings in which some examples are illustrated. Accordingly, while examples are capable of various modifications and alternative forms, the illustrative examples in the figures and will herein be described in detail. It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

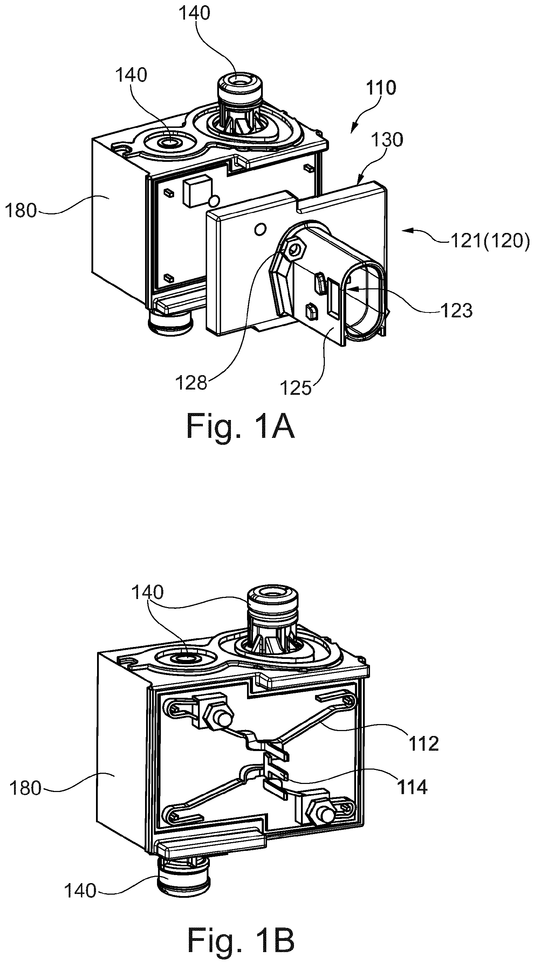

**Fig. 1A** shows a solenoid assembly according to an embodiment of the present invention. The solenoid assembly includes a valve unit 110 with one or more solenoid valves and a first connector assembly 121, which is selected from a plurality of connector assemblies 120. The solenoid assembly further includes a plurality of valve connections 140 which provide, for example, pneumatic or hydraulic lines or represents an exhaust port for the integrated solenoid valve(s). The valve unit 110 comprises further a housing 180 which provides openings for the valve connections 140.

The first connector assembly 121 comprises a first plug connection 125 with contacts 123 and is detachably mounted on one side of the housing 180 providing a cover or lid for the one side of the housing 180. The first connector assembly 121 further includes a printed circuit board 130 (not visible in Fig. 1A) which is mounted to or integrated in the connector assembly 121 and is connected to the contacts 124 of the plug connection 125.

In the depicted embodiment, the connector assembly 121 is detachably mounted to the housing 180 of the valve unit 110 by screw connections 128 which secure the connector assembly 121 to the housing 180. It is understood that the screw connection 128 is only one possibility to detachably or releasable mount of the connector assembly 121 to the valve unit 110. Further embodiments include other or additional detachable connections.

According to embodiments, the printed circuit board, PCB 130, acts as a connector interface allowing various connector assemblies 120 to be connected to the valve unit 110. For this, the PCB 130 includes a contact structure that - when mounting the (first) connector assembly 121 to the housing 180 - electrically connects the solenoid valves and the printed circuit board 130 in the first connector assembly 121. This contact structure provides a releasable electrical connection and may comprise at least one of the following: a contact pin, a spring contact, a plug, a clamp, a terminal, a contact pad.

**Fig. 1B** shows the valve unit 110 without the first connector assembly 121 but with further details such as the electrical wiring or contact strips 112 and contact pins 114 for electrically contacting the solenoid valve(s) integrated in the valve unit 110. The valve pins 114 are connected to the contact strips 112 and are configured to protrude from a side of the valve unit 110. Therefore, when mounting the first connector assembly 121 onto the valve unit 110, the valve pins 114 will contact the printed circuit board 130 in the first connector assembly 121. For example, PCB 130 may comprise corresponding openings into which valve pins 114 can be inserted.

Alternatively, the valve pins 114 can be replaced by spring contacts that - upon mounting the connector assembly 121 onto the valve unit 110 - will get in touch with exemplary contact pads provided on the PCB 130. It is understood that any kind of releasable contact structure 130 may be implemented as interface to establish a releasable electrical contact between the valve unit 110 and the PCB 130 in connector assembly 121.

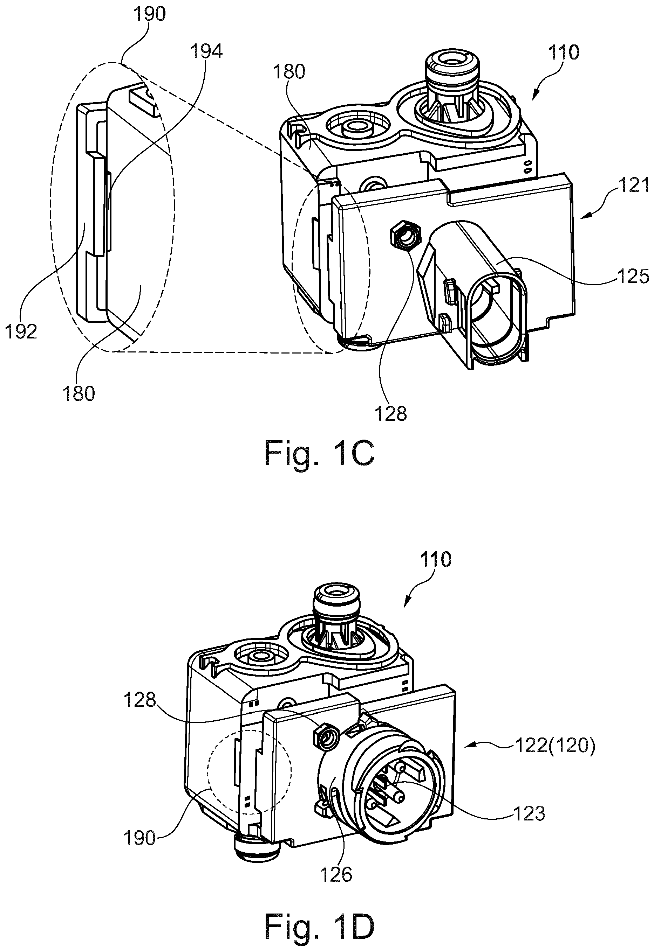

**Fig. 1C** shows the solenoid assembly according to another embodiment, wherein the detachable mounting of the first connector assembly 121 to the valve unit 110 is achieved by using a snap-fit connection 190 in combination with a screw connection 180. The snap-fit connection 190 (see enlarged view) includes a protrusion 192 acting as a grab portion to engage a recess 194 in the housing 180 of valve unit 110. A same snap-fit connection 190 or a releasable hinge may be formed at the opposite side of the first connector assembly 121 to fix the first connector assembly 121 on two opposite sides to the housing 180. The screw connection 128 can be utilized to further secure the connection between the valve unit 110 and the first connector assembly 121. According to this embodiment only a single screw connection 128 is utilized, because the snap-fit connection 190 provides already a fixation.

The first connector assembly 121 was selected from a plurality of connector assemblies 120 to provide different plug connections 125, 126, which are not interchangeably usable. Figs. 1A and 1C showed a first plug connection 125. **Fig. 1D** shows another embodiment, wherein a second connector assembly 122 is mounted to the valve unit 110, for which, again, a snap-fit connection 190 may be utilized. The second connector assembly 122 includes the second plug connection126 which has a circular plug, whereas the first connector assembly 121 as shown in Figs. 1A and 1C with the first plug connection125 has an oval plug. According to further embodiments, there are different oval plug connections 125 and/or different circular plug connections 126, wherein none of them are compatible with other ones. It is understood that any kind of plug connections can be utilized for the connector assemblies 120.

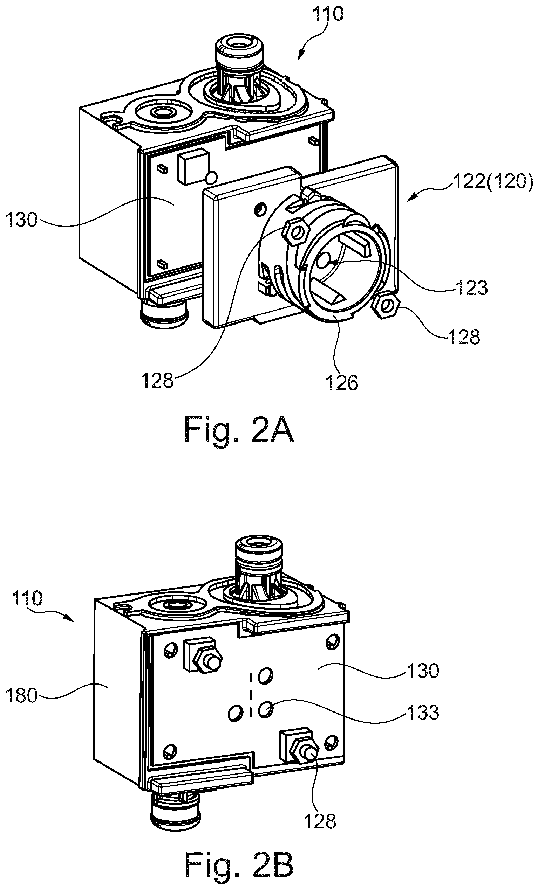

**Fig. 2A** shows the solenoid assembly according to another embodiment, wherein the valve unit 110 is connected to the second connector assembly 122 providing the exemplary circular, second plug connection 126. According to this embodiment, the PCB 130 is included in the valve unit 110 and not in the connector assembly 122 as in Figs. 1A-1D. According to this embodiment, the detachable connection between the second connector assembly 122 to the valve unit 110 (with the PCB 130) can be made by a screw connection 128 and/or by a snap-fit connection as described in Figs. 1C and 1D. For example, if the second connector assembly 122 is only fixed to the valve unit 110 using a screw connection 180, two screw connection can be utilized at different location (e.g. on diametrically opposite sides of the plug connection 126), whereas for an snap-fit or press-fit connection, only one or none screw connection 128 might be used.

**Fig. 2B** shows the valve unit 110 of the embodiment of Fig. 2A with the exposed printed circuit board 130 covering one side of the valve unit 110 and being mounted to the housing 180 of the valve unit 110. According to this embodiment, the printed circuit board 130 includes a contact structure 133 with, e.g., three openings to receive three contact pins (not visible in Fig. 2B) of the second plug assembly 122 when mounting the plug assembly 122 to the valve assembly 110. The contact structure 133 may be formed by spring contacts or contact pads to provide a releasable contact between the printed circuit board 130 and the plug assembly 122. The exemplary contact pins are in electrical contact with the contacts 123 of the plug assembly 122 (see Fig. 2A).

All other features are the same as in the embodiments of Figs. 1A-1D so that a repeated description is not needed.

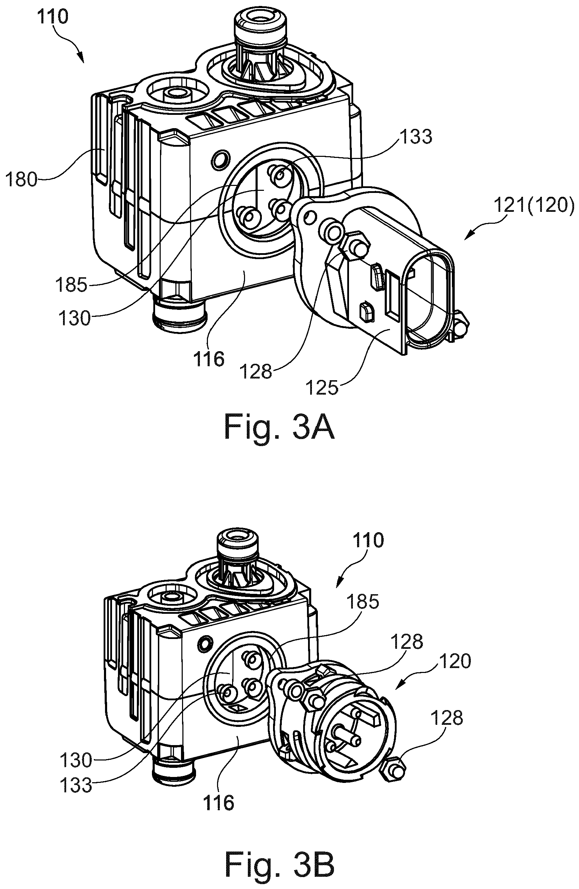

**Figs. 3A** and **3B** illustrate the solenoid assembly according to yet another embodiment, where the printed circuit board 130 is integrated into the housing 180 of the valve unit 110. The valve unit 110 or its housing 180 provides an opening 185 which exposes the three opening 133 of the PCB 130 (see Fig. 2B) for establishing the connection with the connector assemblies 120. In Fig. 3A the selected connector assembly 120 is the first connector assembly 121 (with an oval plug 125), whereas in Fig. 3B the selected connector assembly 120 is the second connector assembly 122 (with a circular plug 126). As set forth before, the connector assembly 120 can be freely selected (e.g., depending on demands or wishes of customers). According to embodiments all connector assemblies 120 are configured to fit to the valve unit 110, i.e. they have universal or compatible means for connection.

According to further embodiments, not only the depicted oval and circular connector assemblies 121, 122 are possible, but any other kind of shape. Likewise, the arrangement of the contacts 123 may differ (e.g. arranged along a line or a triangle). According to the needs, the connector assemblies 121, 122 are selected from the plurality of different connector assemblies 120 and are not compatible with each other so that the solenoid assembly can be manufactured allowing a wide range of different applications. By this, arbitrary plug connections can be implemented for receiving respective electrical signals for the solenoid valve.

Again, the mounting of the connector assemblies 121, 122 to the valve unit 110 can be provided by a screw connection 128 or any other detachable connection (e.g. by a clip connection, press-fit connection, snap-fit connection etc.). For example, the connector assemblies 121, 122 may include two, three or more contact pins that are introduced in openings 133 of the printed circuit board 130 where they are electrically contacted, e.g. by spring contacts. According to embodiments, the contact pins may be portion of the contact 123 of the plug connections 125, 126 or may be separate pins that are electrically connected to the contacts 123 of the plug connections 125, 126.

As set out before, the electrical connection by pins engaging openings in the PCB 130 can be replaced by spring contracts touching contact pads on the PCB 130 or any other releasable electrical contact. Furthermore, the PCB 130 includes electronic components such as at least one chip or processing unit to process the electrical signals received by the connector assembly 120 and to generate control signals for controlling the valve unit 110.

According to embodiments, the solenoid valve unit 110 and the connector assemblies 120 can be manufactured separately and mounted together as a final manufacturing step (e.g. using a snap connection or clip connection or screw connection).

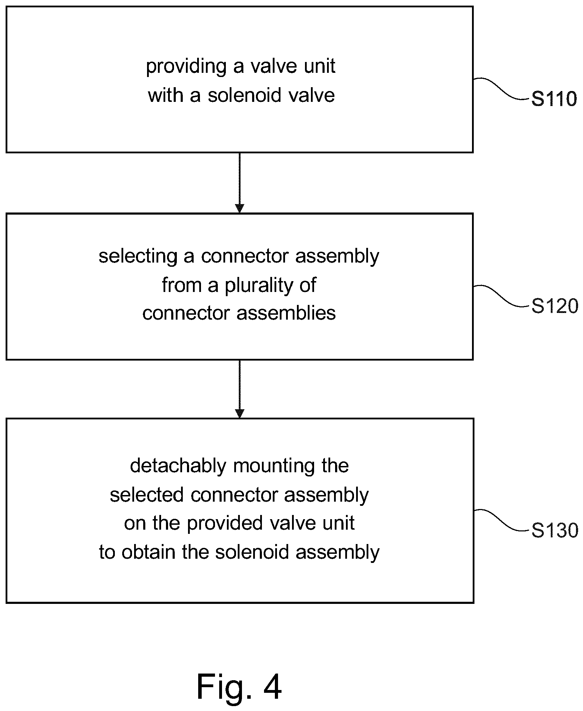

**Fig. 4** shows a schematic flow chart for a method for manufacturing a solenoid assembly. The method comprises:
- providing S110 a valve unit 110 with a solenoid valve;
- selecting S120 a connector assembly 121, 122 from a plurality of connector assemblies 120, each of which provides a different plug connection 125, 126 with contacts 123 for receiving respective electrical signals for the solenoid valve; and
- detachably mounting S130 the selected connector assembly 121, 122 on the provided valve unit 110 to obtain the solenoid assembly.

The valve unit 110 or the selected connector assembly 121, 122 may include a printed circuit board 130 with electronic components configured to process the electrical signals received by the plug connection 125, 126 and to generate control signals for controlling the solenoid valve.

Embodiments provide the advantage that the solenoid assembly provides a modular concept for utilizing various plug connectors 125, 126 for a given valve unit 110, which can easily be replaced - even in the field. For this, a universal valve unit 110 can be provided with a universal connection arrangement fitting for a plurality of different plug assemblies 120. The universal connection arrangement may include predefined positions for the screws or the snap-fit connection or the openings in CPB 130 or other predefined connection means.

Embodiments can be used in various applications such as anti-lock braking system or pressure control valves or any other valve unit in trucks or other utility vehicles.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 10: valve assembly
- 20: plug connector
- 31, 32: solenoid valve(s)
- 40: wiring
- 80: housing
- 110: valve unit
- 112: contact strips
- 114: valve pins
- 116: partial side cover of valve unit
- 120,121, 122: connector assemblies
- 123: contacts of connector assemblies
- 125, 126: plug connections
- 128: detachable connection (e.g. screw connection)
- 130: printed circuit board
- 133: contact structure
- 140: valve connections
- 180: housing
- 185: opening of housing
- 190: snap-fit connection
- 192: protrusion
- 194: recess

## Claims

1. A method for manufacturing a solenoid assembly,
**characterized by:**
- providing (S110) a valve unit (110) with a solenoid valve;
- selecting (S120) a connector assembly (121, 122) from a plurality of connector assemblies (120), each of which provides a different plug connection (125, 126) with contacts (123) for receiving respective electrical signals for controlling the solenoid valve; and
- detachably mounting (S130) the selected connector assembly (121, 122) on the provided valve unit (110) to obtain the solenoid assembly,
wherein the valve unit (110) or the selected connector assembly (121, 122) includes a printed circuit board (130) with electronic components configured to process the electrical signals received by the plug connection (125, 126) and to generate control signals for controlling the solenoid valve.

2. The method according to claim 1,
**characterized in that,**
to mount the selected connector assembly (121, 122) to the valve unit (110), the step of detachably mounting (S130) includes using at least one of the following connections:
- a snap-fit connection,
- a press-fit connection,
- a screw connection.

3. The method according to claim 2, wherein the plurality of connector assemblies (120) includes a first connector assembly (121) with a first plug connection (125) and a second connector assembly (122) with a second plug connection (126), the first plug connection (125) and the second plug connection (125) being different from each other, **characterized in that:**
the connection in the step of detachably mounting (S130) is the same to be used for the first connector assembly (121) and for the second connector assembly (122) so that the first connector assembly (121) and the second connector assembly (122) are interchangeably usable.

4. The method according to one of the preceding claims,
**characterized in that:**
the step detachably mounting (S130) mounts the selected connector assembly (121, 122) as a side cover on the valve unit (110).

5. The method according to one of the preceding claims,
**characterized in that:**
the step of selecting (S120) a connector assembly (121, 122) selects a connector assembly (121, 122) having an oval plug connection (125) or a circular plug connection (126).

6. The method according to one of the preceding claims, wherein the provided valve unit (110) includes a plurality of valve pins (114) being configured to provide an electric contact for the solenoid valve, and wherein the circuit board (130) comprises a contact structure (133) with openings and is secured in the selected connector assembly (121, 122),
**characterized in that:**
the step detachably mounting (S130) includes introducing the valve pins (114) in the contact openings (133) of the printed circuit board (130).

7. The method according to any one of claims 1 to 5, the provided valve unit (110) includes the printed circuit board (130) being electrically connected to the solenoid valve,
**characterized in that:**
the step of detachably mounting the selected connector assembly (121, 122) includes electrically contacting the contacts (123) with the printed circuit board (130) in the valve unit (110).

8. The method according to claim 7, wherein the provided the valve unit (110) includes a cover (116) at least partially covering the printed circuit board (130) secured in the valve unit (110),
**characterized in that:**
the step of detachably mounting (S130) includes mounting the selected connector assembly (121, 122) on the cover (116) of the valve unit (110).

9. A solenoid assembly,
**characterized by:**
- a valve unit (110) with a solenoid valve;
- a connector assembly (121, 122) including a plug connection (125, 126) with contacts (123) for receiving respective electrical signals, the connector assembly (121, 122) being detachably mounted on the valve unit (110); and
- a printed circuit board (130) with electronic components configured to process the electrical signals received by the plug connection (125, 126) and to generate control signals for controlling the solenoid valve,
wherein the printed circuit board (130) includes releasable contact structure (133) as an interface to connect the printed circuit board (130) selectively electrically to the solenoid valve in the valve unit (110) or to contacts (123) of the connector assembly (121, 122).

10. The solenoid assembly of claim 9,
**characterized in that:**
the releasable contact structure (133) comprises one or more of the following: a contact pin, a spring contact, a plug, a clamp, a terminal, a contact pad.
